# EUROPEAN PATENT SPECIFICATION

(11) **EP 3 289 862 B1**
(45) Date of publication and mention of the grant of the patent: **24.10.2018**
(21) Application number: 16187230.4
(22) Date of filing: 05.09.2016
(51) Int. Cl.: A01K 13/00, A46B 7/04

(54) **PET GROOMING TOOL WITH REPLACEABLE COMB PLATES**
HAUSTIERPFLEGEWERKZEUG MIT AUSWECHSELBAREN KAMMPLATTEN
OUTIL DE TOILETTAGE POUR ANIMAUX DE COMPAGNIE AVEC PLAQUES DE PEIGNE REMPLAÇABLE

(43) Date of publication of application: 07.03.2018
(73) Proprietor: Wang, Huo-Pia, Yen-Ping Li Chang-Hua City 500 (TW)
(72) Inventor: Wang, Huo-Pia, Yen-Ping Li Chang-Hua City 500 (TW)
(74) Representative: Delorme, Nicolas

(56) References cited:
- WO-A1-2016/023699
- WO-A1-2016/051046
- TW-U- M 370 331
- US-A- 5 462 018

## Description

The disclosure relates to a pet grooming tool, and more particularly to a pet grooming tool with replaceable comb plates for different use.

A conventional pet grooming tool with replaceable comb heads as disclosed in Taiwanese Patent No. M370331 generally includes a tubular handle and a plurality of comb heads. Each of the comb heads has a shaft portion detachably coupled with an end of the handle and locked by means of a collar locking device. By operating a shifter to rotate a ring sleeved on the end of the handle, a collar fixed on the handle is unlocked so as to permit removal of the comb head from the handle for replacement of another comb head. Such pet grooming tool has a large number of components, thereby resulting in a higher manufacturing cost and inconvenience during assembly.

Also known from the prior art is the document WO2016023699, disclosing: A pet grooming tool comprising a tool body having a handle portion and an insert slot which are disposed opposite to each other in a longitudinal direction, said insert slot being defined by front and rear wall surfaces which are disposed opposite to each other in the longitudinal direction and each of which extends in a first transverse direction that is transverse to the longitudinal direction, and a plurality of comb plates, each having an insert plate portion which is configured to be inserted into said insert slot in the first transverse direction, and which has two plate major surfaces that are configured to be attached to said front and rear wall surfaces, respectively, and a plate minor surface that interconnects said plate major surfaces, and a comb portion which extends from said plate minor surface in the first transverse direction to project outwardly of said tool body.

Therefore, an object of the disclosure is to provide a pet grooming tool that has a simple construction and that is easy to fabricate at a relatively low manufacturing cost.

According to the invention, as defined in claim 1, the pet grooming tool includes a tool body having a handle portion and an insert slot which are disposed opposite to each other in a longitudinal direction. The insert slot is defined by front and rear wall surfaces which are disposed opposite to each other in the longitudinal direction and each of which extends in a first transverse direction that is transverse to the longitudinal direction. The tool body further has a latch displacing space which extends therein from the insert slot and which defines a latch displacing path. The pet grooming tool further includes a latch unit. The latch unit includes a latch member having a latch portion which is disposed to be displaceable along the latch displacing path between an unlatch position, where the latch portion is disposed in the latch displacing space, and a latch position, where the latch portion is disposed in the insert slot, and a biasing member disposed in the latch displacing space to bias the latch portion to the latch position. The pet grooming tool further includes a plurality of comb plates, each having an insert plate portion which is configured to be inserted into the insert slot in the first transverse direction, and which has two plate major surfaces that are configured to be attached to the front and rear wall surfaces, respectively, a latch hole that extends from one of the plate major surfaces toward the other one of the plate major surfaces and that is registered with the latch displacing path when the insert plate portion is inserted into the insert slot so as to permit retaining of the latch portion in the latch hole when the latch portion is in the latch position, and a plate minor surface that interconnects the plate major surfaces, and a comb portion which extends from the plate minor surface in the first transverse direction to project outwardly of the tool body.

Other features and advantages of the disclosure will become apparent in the following detailed description of the embodiments with reference to the accompanying drawings, of which:
FIG. 1 is a perspective view of a first embodiment of a pet grooming tool according to the disclosure;
FIG. 2 is an exploded perspective view of the first embodiment;
FIG. 3 is a fragmentary sectional view of the first embodiment;
FIG. 4 is a sectional view taken along line IV-IV of FIG. 3;
FIG. 5 is a fragmentary sectional view illustrating a state when a latch unit of the first embodiment is operated to an unlatch position;
FIG. 6 is a fragmentary sectional view of a second embodiment according to the disclosure;
FIG. 7 is a fragmentary sectional view illustrating a state when a comb plate is removed from a tool body of the second embodiment;
FIG. 8 is a fragmentary sectional view of a third embodiment according to the disclosure;
FIG. 9 is a fragmentary sectional view illustrating a state when a latch unit of the third embodiment is operated to an unlatch position;
FIG. 10 is a fragmentary sectional view of a fourth embodiment according to the disclosure;
FIG. 11 is a fragmentary sectional view illustrating a state when a latch unit of the fourth embodiment is operated to an unlatch position;
FIG. 12 is a perspective view of a fifth embodiment according to the disclosure;
FIG. 13 is a perspective view of a sixth embodiment according to the disclosure;
FIG. 14 is a perspective view of a seventh embodiment according to the disclosure; and
FIG. 15 is a perspective view of an eighth embodiment according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

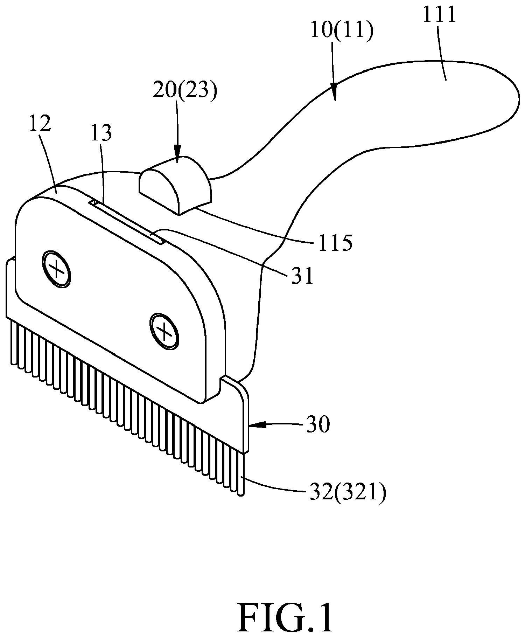

Referring to FIGS. 1 to 3, a first embodiment of a pet grooming tool according to the disclosure is shown to include a tool body 10, a latch unit 20 and a plurality of comb plates 30.

The tool body 10 includes a handle 11 which has a handle portion 111 and which extends from the handle portion 111 in a longitudinal direction to terminate at a rear wall surface 117 that extends in a first transverse direction transverse to the longitudinal direction, and a mounting seat 12 which is secured to the handle 11 by means of screws 121 and which has a front wall surface 127 that extends in the first transverse direction and that is recessed to face and cooperate with the rear wall surface 117 to define an insert slot 13. The rear wall surface 117 of the handle 11 is recessed along a latch displacing path in the longitudinal direction to define a latch displacing space 116 so as to be in spatial communication with the insert slot 13.

The handle 11 has an upper wall 113 and a lower wall 114 opposite to each other in a second transverse direction that is transverse to the latch displacing path. In this embodiment, the second transverse direction coincides with the first transverse direction such that the sliding slot 13 extends from the upper wall 113 through the lower wall 114. Further, a sliding slot 115 extends from the upper wall 113 in the second transverse direction and through the lower wall 114 to be in spatial communication with the latch displacing space 116.

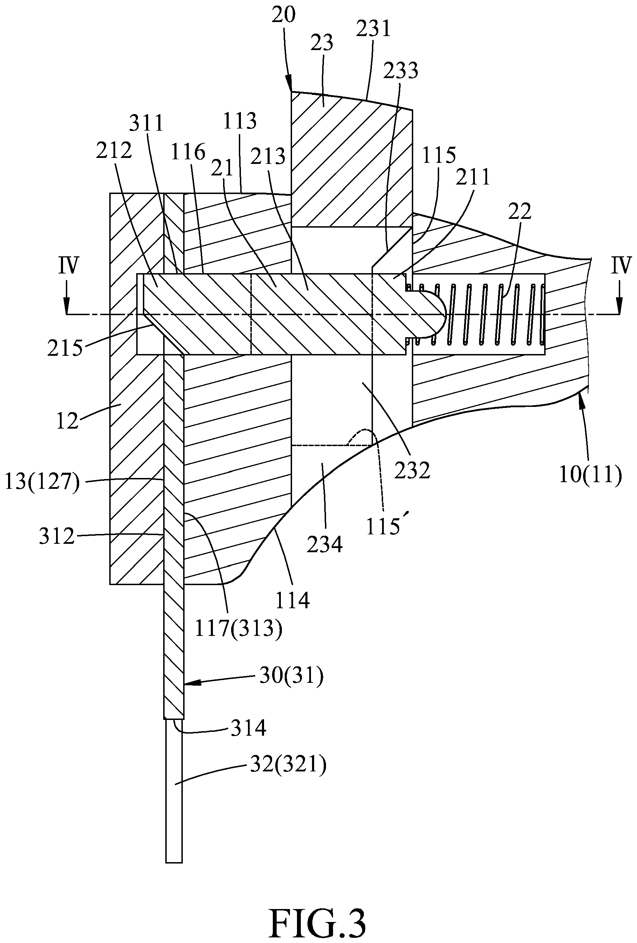

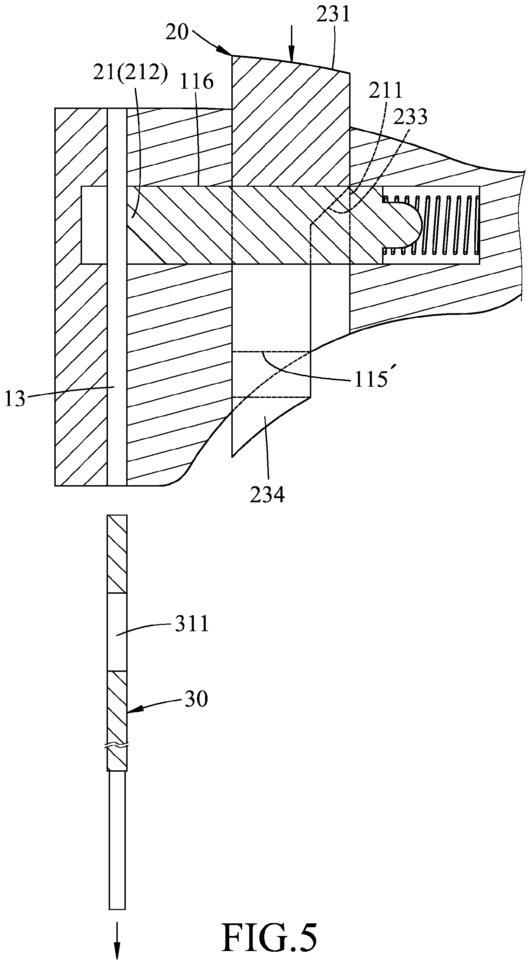

The latch unit 20 is mounted in the handle 11, and includes a latch member 21 movably disposed in the latch displacing space 116, an operating member 23 movably disposed in the sliding slot 115, and a biasing member 22 disposed in the latch displacing space 116 and remote from the insert slot 13. The latch member 21 has a latch portion 212 which is disposed to be displaceable along the latch displacing path between an unlatch position (as shown in FIG. 5), where the latch portion 212 is disposed in the latch displacing space 116, and a latch position (as shown in FIG. 3), where the latch portion 212 is disposed in the insert slot 13, and a driven portion 211 opposite to the latch portion 212 along the latch displacing path. The biasing member 22, such as a compression spring, is disposed to bias the latch portion 212 of the latch member 21 to the latch position.

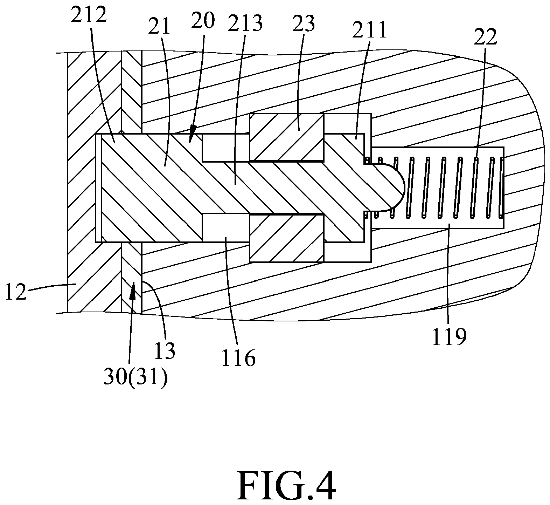

The operating member 23 has a coupling portion 233 which is disposed in and slidable along the sliding slot 115, an operated portion 231 which projects upwardly of the upper wall 113 of the handle 11, and a pair of resilient dog portions 232 which extend from the coupling portion 233 in the second transverse direction and which have hook ends 234 that hook on a hook portion 115' of the lower wall 114 when the resilient dog portions 232 pass snugly through the sliding slot 115. The coupling portion 233 is in the form of a slope surface matingly coupled with the driven portion 211 of the latch member 21 such that, when the operating portion 231 is depressed manually toward the upper wall 113, the latch portion 212 is thrust to retreat into the latch displacing space 116 to the unlatch position. Further, the latch member 21 has a neck portion 213 interposed between the latch and driven portions 212, 211 and is retained between the resilient dog portions 232, as shown in FIG. 4.

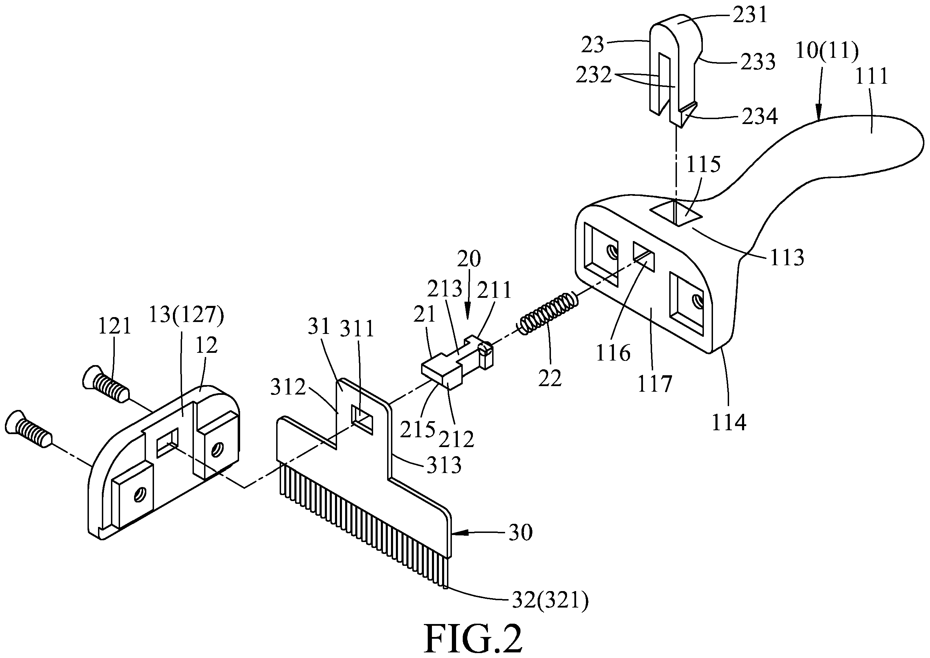

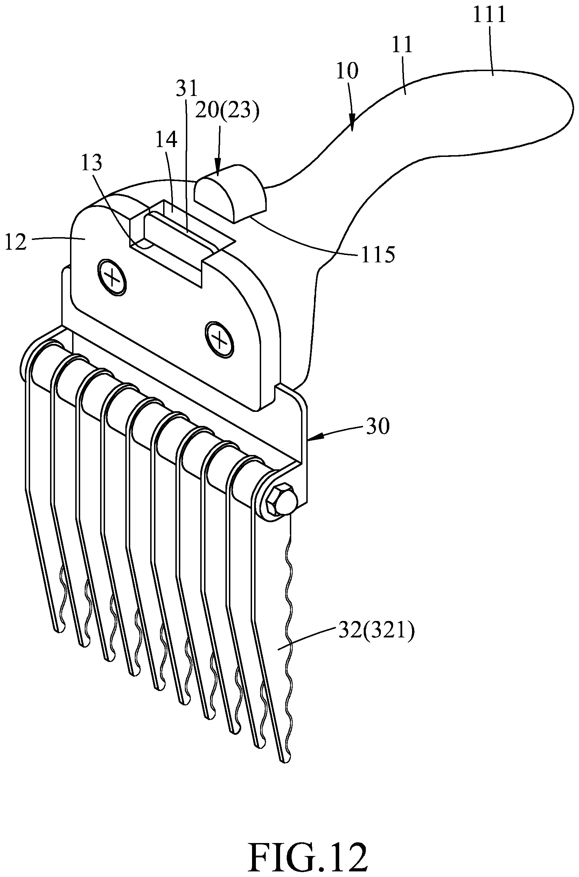

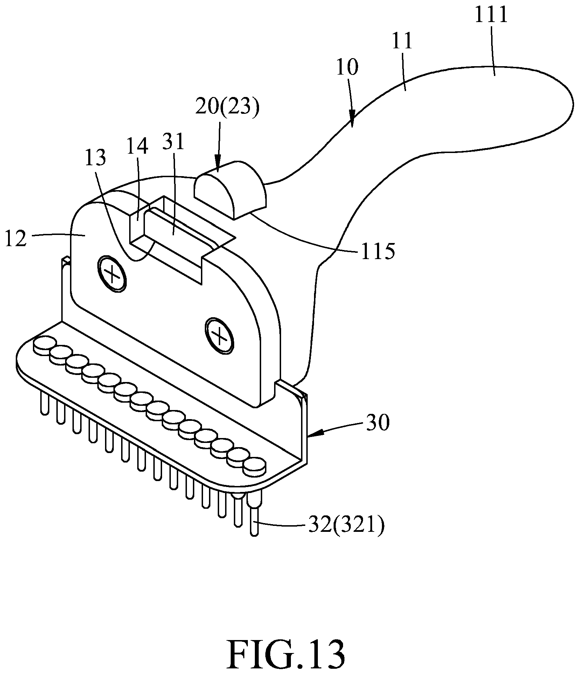

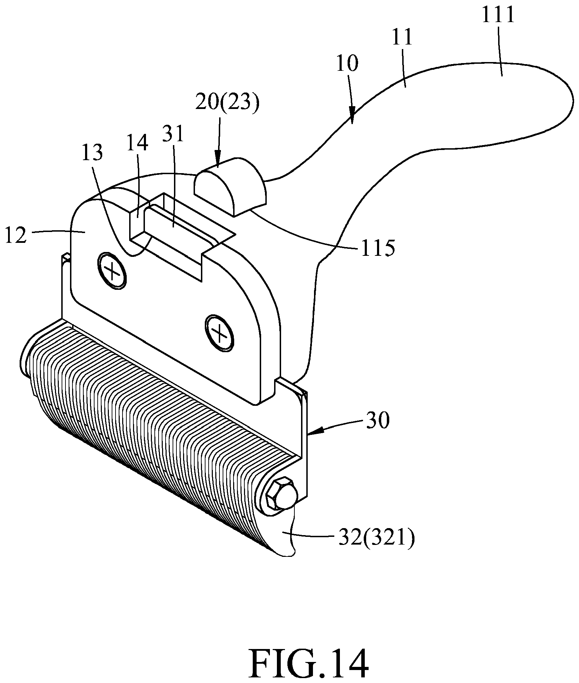

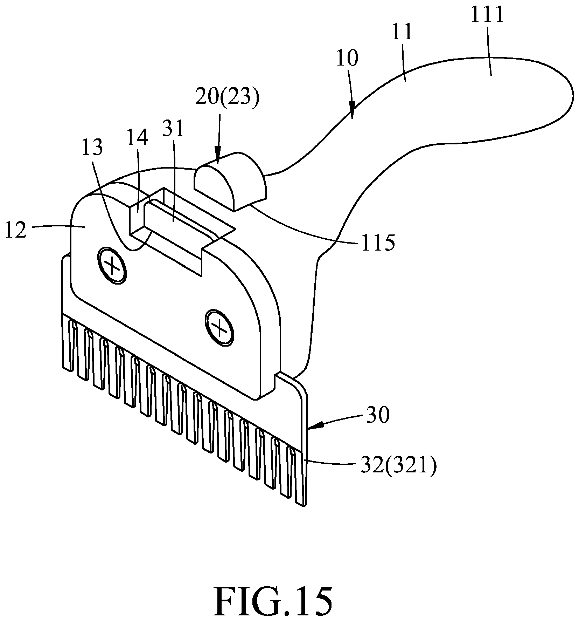

Each of the comb plates 30 has an insert plate portion 31 which is configured to be inserted into the insert slot 13 in the first transverse direction, and which has two plate major surfaces 312, 313 that are configured to be attached to the front and rear wall surfaces 127, 117, respectively, a latch hole 311 that extends from one of the plate major surface 312 through the other one of the plate major surface 313 and that is registered with the latch displacing path when the insert plate portion 31 is inserted into the insert slot 13 so as to permit retaining of the latch portion 212 in the latch hole 311 when the latch portion 212 is in the latch position, and a plate minor surface 314 that interconnects the plate major surfaces 312, 313, and a comb portion 32 which extends from the plate minor surface 314 in the first transverse direction to project outwardly of the tool body 10. The comb portions 32 of the comb plates 30 have a plurality of teeth 321 which are formed in a variety of shapes for performing different grooming tasks. For example, in FIGS. 2 and 13, the teeth 321 are in the form of needle bars for grooming pets. In FIGS. 12 and 14, the teeth 321 are in the form of dematting blades to cut and remove tangled and matted hair. In FIG. 15, the teeth 321 are in the form of comb teeth for grooming a short-hair pet.

Referring to FIG. 5, by manually pressing the operated portion 231, the latch portion 212 is removed from the latch hole 311 while the hook ends 234 are removed from the hook portion 115' so as to permit detachment of the comb plate 30 from the insert slot 13. Another comb plate 30, such as one of those shown in FIGS. 12 to 15, can be inserted into the insert slot 13 for different use. As shown in FIGS. 2 and 3, the latch portion 212 has a slope surface 215 which is urged to retreat into the latch displacing space 116 during insertion of the comb plate 30 into the insert slot 13.

As illustrated, the pet grooming tool of this embodiment has a simple construction which is easy to fabricate and assemble, thereby reducing the manufacturing cost, and which permits ease of replacement of the comb plates for different applications.

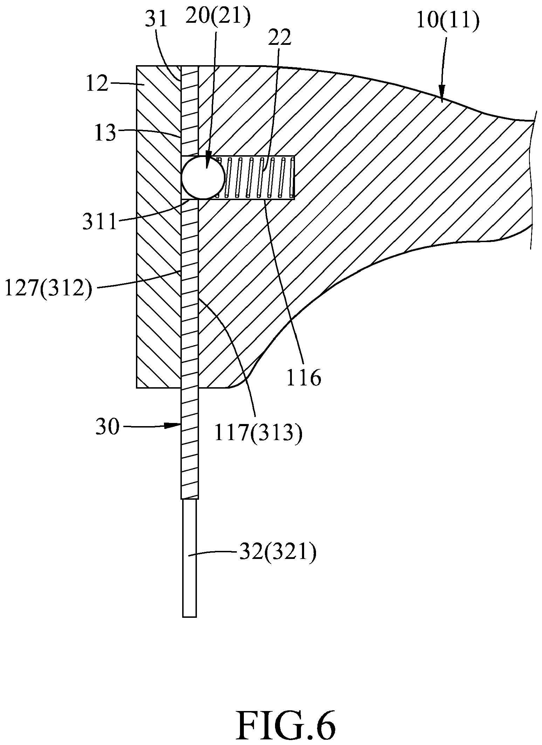

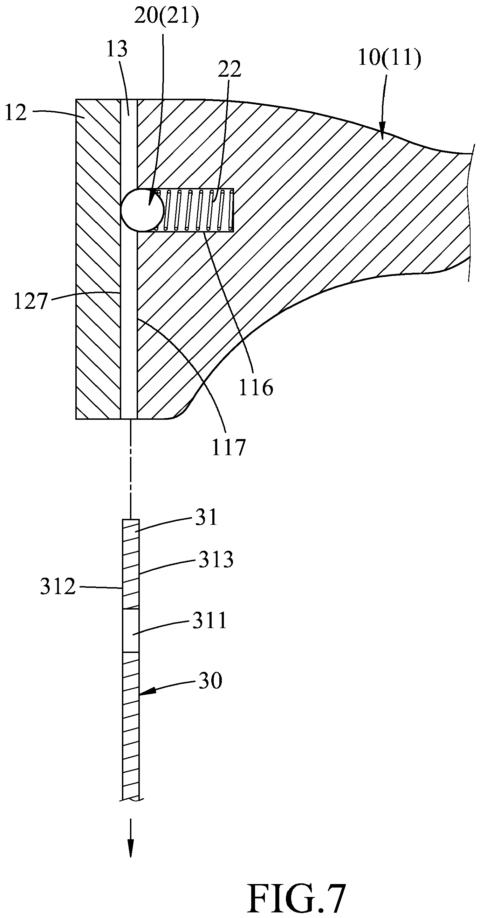

Referring to FIGS. 6 and 7, in a second embodiment of the disclosure, the latch member 21 is in the form of a steel ball. The rear wall surface 117 of the handle 11 is recessed to define the latch displacing space 116 and to extend the latch displacing path in the longitudinal direction. When it is desired to replace the comb plate 30 inserted into the insert slot 13, the user can pull the comb plate 30 to permit removal of the latch member 21 from the latch hole 311 against the biasing action of the biasing member 22. Hence, in this embodiment, the operating member 23 (see FIG. 2) is omitted.

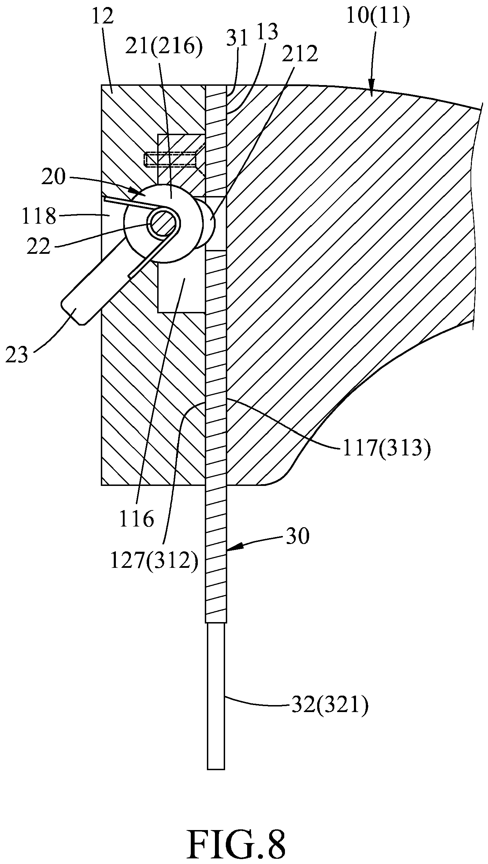

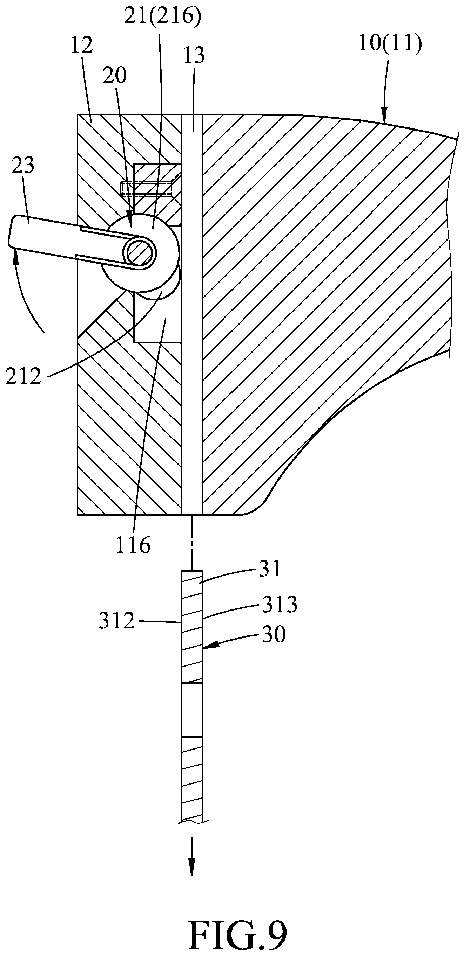

Referring to FIGS. 8 and 9, in a third embodiment of the disclosure, the front wall surface 127 is recessed to define the latch displacing space 116 in the longitudinal direction. The latch displacing space 116 is configured to have an enlarged opening 118 in a front side of the mounting seat 12. The latch member 21 has a pivot portion 216 which is pivotably mounted on the mounting seat 12. The latch portion 212 extends radially from the pivot portion 216 such that, by turning of the pivot portion 216, the latch portion 212 is displaced between the latch position and the unlatch position. In other words, the latch displacing path is a curve path surrounding the pivot portion 216. The operating member 23 is integrally formed with the latch member 21, extends radially from the pivot portion 216, and is angularly displaced from the latch portion 212 to project outwardly from the opening 118. The biasing member 22 is a coil spring to provide a torque so as to bias the latch portion 212 into the insert slot 13.

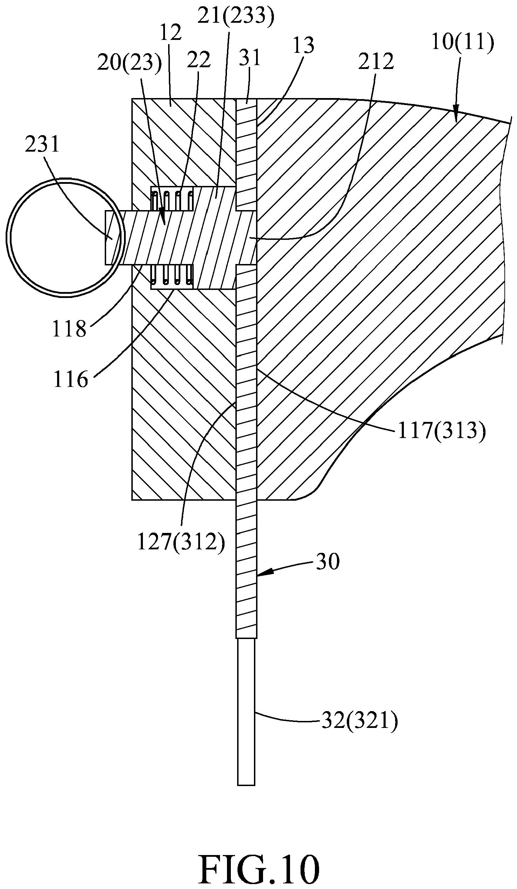

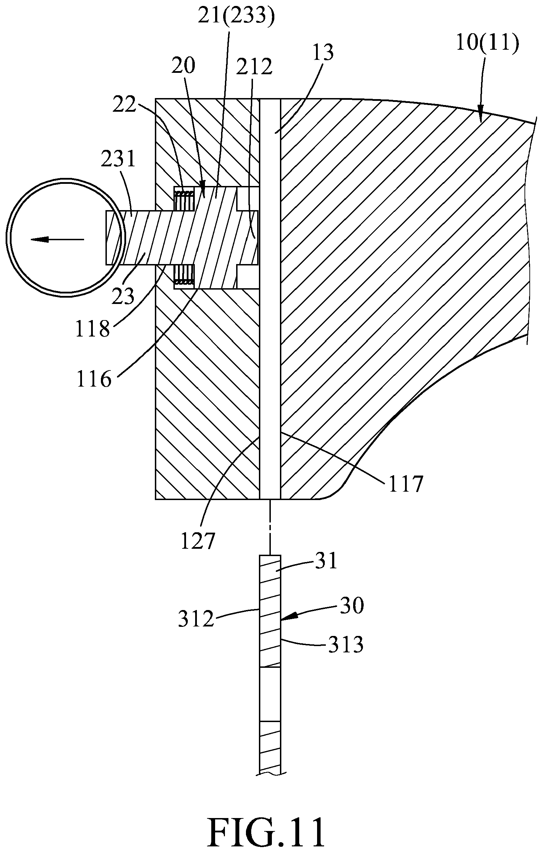

Referring to FIGS. 10 and 11, in a fourth embodiment of the disclosure, the front wall surface 127 is recessed to define the latch displacing space 116 and to extend the latch displacing path in the longitudinal direction . The coupling portion 233 of the operating member 23 is integrally formed with and extends from the latch member 21 in the longitudinal direction to terminate at the operated portion 231 that projects outwardly from the opening 118 of the mounting seat 12 such that, by pulling of the operated portion 231, the latch portion 212 is displaced to retreat into the latch displacing space 116 to the unlatch position.

Referring to FIG. 12, in a fifth embodiment or either one of aforesaid embodiments, the tool body 10 has an access opening 14 which extends to be in communication with the insert slot 13 and which is disposed opposite to the comb portion 32 of the comb plate 30 inserted into the insert slot 13 in the first transverse direction such that the comb plate 30 is accessible from the access opening 14, which facilitates removal of the comb plate 30 from the insert slot 13.

## Claims

1. A pet grooming tool comprising:
a tool body (10) having a handle portion (111) and an insert slot (13) which are disposed opposite to each other in a longitudinal direction, said insert slot (13) being defined by front and rear wall surfaces (127, 117) which are disposed opposite to each other in the longitudinal direction and each of which extends in a first transverse direction that is transverse to the longitudinal direction, wherein:
said tool body (10) further has a latch displacing space (116) which extends therein from said insert slot (13) and which defines a latch displacing path;
said pet grooming tool further comprising
a latch unit (20) including a latch member (21) having a latch portion (212) which is disposed to be displaceable along the latch displacing path between an unlatch position, where said latch portion (212) is disposed in said latch displacing space (116), and a latch position, where said latch portion (212) is disposed in said insert slot (13), and a biasing member (22) disposed in said latch displacing space (116) to bias said latch portion (212) to the latch position; and
a plurality of comb plates (30), each having an insert plate portion (31) which is configured to be inserted into said insert slot (13) in the first transverse direction, and which has two plate major surfaces (312, 313) that are configured to be attached to said front and rear wall surfaces (127, 117), respectively, a latch hole (311) that extends from one of said plate major surfaces (312, 313) toward the other one of said plate major surfaces (312, 313) and that is registered with said latch displacing path when said insert plate portion (31) is inserted into said insert slot (13) so as to permit retaining of said latch portion (212) in said latch hole (311) when said latch portion (212) is in the latch position, and a plate minor surface (314) that interconnects said plate major surfaces (312, 313), and a comb portion (32) which extends from said plate minor surface (314) in the first transverse direction to project outwardly of said tool body (10).

2. The pet grooming tool as claimed in Claim 1, **characterized in that** said tool body (10) includes a handle (11) which has said handle portion (111) and which extends from said handle portion (111) in the longitudinal direction to terminate at said rear wall surface (117), and a mounting seat (12) which has said front wall surface (127) that is recessed to face and cooperate with said rear wall surface (117) to define said insert slot (13), one of said front and rear wall surfaces (127, 117) being recessed along said latch displacing path to define said latch displacing space (116) .

3. The pet grooming tool as claimed in Claim 2, **characterized in that** said latch unit (20) further has an operating member (23) disposed in one of said handle (11) and said mounting seat (12), and having a coupling portion (233) which is coupled with said latch member (21) to make the displacement of said latch portion (212) to the unlatch position, and an operated portion (231) which projects outwardly from said tool body (10) to be manually operable.

4. The pet grooming tool as claimed in Claim 3, **characterized in that** said handle (11) has an upper wall (113) and a sliding slot (115) which extends from said upper wall (113) in a second transverse direction that is transverse to the latch displacing path, and which is in spatial communication with said latch displacing space (116), said latch member (21) having a driven portion (211) opposite to said latch portion (212) along said latch displacing path, said coupling portion (233) of said operating member (23) being disposed in and slidable along said sliding slot (115) to have said operated portion (231) projecting upwardly of said upper wall (113), and being configured such that, when said operating portion (231) is depressed toward said upper wall (113), said latch portion (212) is thrust to retreat into said latch displacing space (116) to the unlatch position.

5. The pet grooming tool as claimed in Claim 4, **characterized in that** said handle (11) further has a lower wall (114) which is opposite to said upper wall (113) in the second transverse direction and through which said sliding slot (115) extends, said operating member (23) further having a pair of resilient dog portions (232) which extend from said coupling portion (233) in the second transverse direction and which have hook ends (234) that hook on said lower wall (114) when said resilient dog portions (232) pass snugly through said sliding slot (115) .

6. The pet grooming tool as claimed in Claim 2, **characterized in that** said latch member (21) is in the form of a steel ball, and said rear wall surface (117) is recessed to define said latch displacing space (116) and to extend said latch displacing path in the longitudinal direction.

7. The pet grooming tool as claimed in Claim 3, **characterized in that** said front wall surface (127) is recessed to define said latch displacing space (116) in the longitudinal direction, said latch member (21) having a pivot portion (216) which is pivotably mounted on said mounting seat (12), said latch portion (212) extending radially from said pivot portion (216) such that, by turning of said pivot portion (216), said latch portion (212) is displaced between the latch position and the unlatch position, said operating member (23) extending radially from said pivot portion (216) and angularly displaced from said latch portion (212) .

8. The pet grooming tool as claimed in Claim 3, **characterized in that** said front wall surface (127) is recessed to define said latch displacing space (116) and to extend said latch displacing path in the longitudinal direction, said coupling portion (233) of said operating member (23) extending from said latch member (21) in the longitudinal direction to terminate at said operated portion (231) that projects outwardly of said mounting seat (12) such that, by pulling of said operated portion (231), said latch portion (212) is displaced to retreat into said latch displacing space (116) to the unlatch position.

9. The pet grooming tool as claimed in Claim 1, **characterized in that** said comb portion (32) of at least one of said comb plates (30) has a plurality of teeth (321) in a form of needle bars, said comb portion (32) of at least one of said comb plates (30) having a plurality of teeth (321) in a form of dematting blades.

10. The pet grooming tool as claimed in Claim 2, **characterized in that** said tool body (10) has an access opening (14) which extends to be in communication with said insert slot (13) and which is disposed opposite to said comb portion (32) of one of said comb plates (30) inserted into said insert slot (13) in the first transverse direction such that said one of said comb plates (30) is accessible from said access opening (14).

## Patentansprüche

1. Haustier-Körperpflegegerät, umfassend:
einen Gerätekörper (10), der einen Griffabschnitt (111) und einen Einsatzschlitz (13) aufweist, die einander gegenüber in einer Längsrichtung angeordnet sind, wobei der Einsatzschlitz (13) durch vordere und hintere Wandoberflächen (127, 117) definiert wird, die einander gegenüber in der Längsrichtung angeordnet sind, und von denen sich jede in eine erste Querrichtung erstreckt, die quer zur Längsrichtung verläuft, wobei:
der Gerätekörper (10) weiter einen Riegelverschieberaum (116) aufweist, der sich darin von dem Einsatzschlitz (13) erstreckt und der einen Riegelverschiebepfad definiert;
wobei das Haustier-Körperpflegegerät weiter umfasst
eine Riegeleinheit (20), die ein Riegelelement (21) einschließt, das einen Riegelabschnitt (212) aufweist, der angeordnet ist, um entlang des Riegelverschiebepfads zwischen einer Entriegelposition, in der der Riegelabschnitt (212) in dem Riegelverschieberaum (116) angeordnet ist, und einer Riegelposition verschoben zu werden, in der der Riegelabschnitt (212) in dem Einsatzschlitz (13) angeordnet ist, und ein Vorspannelement (22), das in dem Riegelverschieberaum (116) angeordnet ist, um den Riegelabschnitt (212) in der Riegelposition vorzuspannen; und
eine Vielzahl von Kammplatten (30), wobei jede einen Einsatzplattenabschnitt (31) aufweist, der konfiguriert ist, um in den Einsatzschlitz (13) in der ersten Querrichtung eingesetzt zu werden, und der zwei flache Hauptoberflächen (312, 313) aufweist, die konfiguriert sind, um jeweils an den vorderen und hinteren Wandoberflächen (127, 117) befestigt zu werden, ein Riegelloch (311), das sich von einer der flachen Hauptoberflächen (312, 313) zu der anderen der flachen Hauptoberflächen (312, 313) erstreckt und das mit dem Riegelverschiebepfad registriert ist, wenn der Einsatzplattenabschnitt (31) in den Einsatzschlitz (13) eingesetzt ist, um es zu ermöglichen, den Riegelabschnitt (212) in dem Riegelloch (311) zurückzuhalten, wenn der Riegelabschnitt (212) in der Riegelposition ist, und eine flache Nebenoberfläche (314), die die flachen Hauptoberflächen (312, 313) verbindet und einen Kammabschnitt (32), der sich von der flachen Nebenoberfläche (314) in der ersten Querrichtung erstreckt, um nach außen aus dem Gerätekörper (10) vorzustehen.

2. Haustier-Körperpflegegerät nach Anspruch 1, **dadurch gekennzeichnet, dass** der Gerätekörper (10) einen Griff (11) einschließt, der den Griffabschnitt (111) aufweist und der sich aus dem Griffabschnitt (111) in der Längsrichtung erstreckt, um an der hinteren Wandoberfläche (117) zu enden, und einen Montagesitz (12), der die vordere Wandoberfläche (127) aufweist, die vertieft ist, um sich der hinteren Wandoberfläche (117) zuzuwenden und mit dieser zusammenzuwirken, um den Einsatzschlitz (13) zu definieren, wobei eine der vorderen und hinteren Wandoberflächen (127, 117) entlang des Riegelverschiebepfads vertieft ist, um den Riegelverschieberaum (116) zu definieren.

3. Haustier-Körperpflegegerät nach Anspruch 2, **dadurch gekennzeichnet, dass** die Riegeleinheit (20) weiter ein Betätigungselement (23) aufweist, das in einem von dem Griff (11) und dem Montagesitz (12) angeordnet ist, und einen Koppelabschnitt (233) aufweist, der mit dem Riegelelement (21) gekoppelt ist, um die Verschiebung des Riegelabschnitts (212) in die Entriegelposition durchzuführen, und einen betätigten Abschnitt (231), der nach außen aus dem Gerätekörper (10) vorsteht, um von Hand betätigt zu werden.

4. Haustier-Körperpflegegerät nach Anspruch 3, **dadurch gekennzeichnet, dass** der Griff (11) eine obere Wand (113) und einen Gleitschlitz (115) aufweist, der sich von der oberen Wand (113) in eine zweite Querrichtung erstreckt, die quer zu dem Riegelverschiebepfad verläuft, und die in räumlicher Verbindung mit dem Riegelverschieberaum (116) steht, wobei das Riegelelement (21) einen angetriebenen Abschnitt (211) gegenüber dem Riegelabschnitt (212) entlang des Riegelverschiebepfads aufweist, wobei der Koppelabschnitt (233) des Betätigungselements (23) in und entlang des Gleitschlitzes (115) verschiebbar angeordnet ist, um den betätigten Abschnitt (231) aufzuweisen, der sich aufwärts der oberen Wand (113) erstreckt, und so konfiguriert ist, dass, wenn der betätigte Abschnitt (231) zur oberen Wand (113) druckentlastet wird, der Riegelabschnitt (212) geschoben wird, um sich in den Riegelverschieberaum (116) in die Entriegelposition zurückzuziehen.

5. Haustier-Körperpflegegerät nach Anspruch 4, **dadurch gekennzeichnet, dass** der Griff (11) weiter eine untere Wand (114) aufweist, die der oberen Wand (113) in der zweiten Querrichtung gegenüberliegt, und durch die sich der Gleitschlitz (115) erstreckt, wobei das Betätigungselement (23) weiter ein Paar elastischer Klammerabschnitte (232) aufweist, die sich von dem Koppelabschnitt (233) in der zweiten Querrichtung erstrecken und die Hakenenden (234) aufweisen, die sich an der unteren Wand (114) einhaken, wenn die elastischen Klammerabschnitte (232) eng anliegend durch den Gleitschlitz (115) führen.

6. Haustier-Körperpflegegerät nach Anspruch 2, **dadurch gekennzeichnet, dass** das Riegelelement (21) in der Form einer Stahlkugel ist und die hintere Wandoberfläche (117) vertieft ist, um den Riegelverschieberaum (116) zu definieren, und den Riegelverschiebepfad in der Längsrichtung zu erstrecken.

7. Haustier-Körperpflegegerät nach Anspruch 3, **dadurch gekennzeichnet, dass** die vordere Wandoberfläche (127) vertieft ist, um den Riegelverschieberaum (116) in der Längsrichtung zu definieren, wobei das Riegelelement (21) einen Schwenkabschnitt (216) aufweist, der schwenkbar auf dem Montagesitz (12) montiert ist, wobei sich der Riegelabschnitt (212) radial von dem Schwenkabschnitt (216) erstreckt, sodass der Riegelabschnitt (212) durch Verdrehen des Schwenkabschnitts (216) zwischen der Riegelposition und der Entriegelposition verschoben wird, wobei sich das Betätigungselement (23) radial von dem Schwenkabschnitt (216) erstreckt und winkelig von dem Riegelabschnitt (212) verschoben wird.

8. Haustier-Körperpflegegerät nach Anspruch 3, **dadurch gekennzeichnet, dass** die vordere Wandoberfläche (127) vertieft ist, um den Riegelverschieberaum (116) zu definieren und den Riegelverschiebepfad in der Längsrichtung zu erstrecken, wobei sich der Koppelabschnitt (233) des Betätigungselements (23) von dem Riegelelement (21) in der Längsrichtung erstreckt, um in dem betätigten Abschnitt (231) zu enden, der nach außen aus dem Montagesitz (12) vorsteht, sodass der Riegelabschnitt (212) durch Ziehen des betätigten Abschnitts (231) verschoben wird, um sich in den Riegelverschieberaum (116) in die Entriegelposition zurückzuziehen.

9. Haustier-Körperpflegegerät nach Anspruch 1, **dadurch gekennzeichnet, dass** der Kammabschnitt (32) von mindestens einer der Kammplatten (30) eine Vielzahl von Zähnen (321) in einer Form von Nadelstangen aufweist, wobei der Kammabschnitt (32) von mindestens einer der Kammplatten (30) eine Vielzahl von Zähnen (321) in einer Form von Dematting-Klingen aufweist.

10. Haustier-Körperpflegegerät nach Anspruch 2, **dadurch gekennzeichnet, dass** der Gerätekörper (10) eine Zugangsöffnung (14) aufweist, die sich erstreckt, um in Verbindung mit dem Einsatzschlitz (13) zu sein, und die gegenüber dem Kammabschnitt (32) von einer der Kammplatten (30) angeordnet ist, die in den Einsatzschlitz (13) in der ersten Querrichtung eingesetzt ist, sodass die eine der Kammplatten (30) von der Zugangsöffnung (14) aus zugänglich ist.

## Revendications

1. Outil de toilettage pour animaux de compagnie comprenant :
un corps d'outil (10) ayant une partie de poignée (111) et une fente d'insertion (13) qui sont disposées en regard l'une de l'autre dans une direction longitudinale, ladite fente d'insertion (13) étant définie par des surfaces de paroi avant et arrière (127, 117) qui sont disposées en regard l'une de l'autre dans la direction longitudinale et dont chacune s'étend dans une première direction transversale qui est transversale à la direction longitudinale, où :
ledit corps d'outil (10) a en outre un espace de déplacement de verrou (116) qui s'étend à l'intérieur de celui-ci depuis ladite fente d'insertion (13) et qui définit un chemin de déplacement de verrou ;
ledit outil de toilettage pour animaux de compagnie comprenant en outre
une unité de verrouillage (20) comportant un élément de verrouillage (21) ayant une partie de verrouillage (212) qui est disposée de manière à pouvoir se déplacer le long du chemin de déplacement de verrou entre une position de déverrouillage, dans laquelle ladite partie de verrouillage (212) est disposée dans ledit espace de déplacement de verrou (116), et une position de verrouillage, dans laquelle ladite partie de verrouillage (212) est disposée dans ladite fente d'insertion (13), et un élément de sollicitation (22) disposé dans ledit espace de déplacement de verrou (116) pour solliciter ladite partie de verrouillage (212) vers la position de verrouillage ; et
une pluralité de plaques de peigne (30), ayant chacune une partie de plaque d'insertion (31) qui est configurée pour être insérée dans ladite fente d'insertion (13) dans la première direction transversale, et qui a deux surfaces principales de plaque (312, 313) qui sont configurées pour être fixées auxdites surfaces de paroi avant et arrière (127, 117), respectivement, un trou de verrouillage (311) qui s'étend depuis l'une desdites surfaces principales de plaque (312, 313) vers l'autre surface desdites surfaces principales de plaque (312, 313) et qui est enregistré avec ledit chemin de déplacement de verrou lorsque ladite partie de plaque d'insertion (31) est insérée dans ladite fente d'insertion (13) de manière à permettre la retenue de ladite partie de verrouillage (212) dans ledit trou de verrouillage (311) lorsque ladite partie de verrouillage (212) se trouve dans la position de verrouillage, et une surface mineure de plaque (314) qui interconnecte lesdites surfaces principales de plaque (312, 313), et une partie de peigne (32) qui s'étend depuis ladite surface mineure de plaque (314) dans la première direction transversale pour faire saillie vers l'extérieur dudit corps d'outil (10).

2. Outil de toilettage pour animaux de compagnie tel que revendiqué dans la revendication 1, **caractérisé en ce que** ledit corps d'outil (10) comporte une poignée (11) qui a ladite partie de poignée (111) et qui s'étend depuis ladite partie de poignée (111) dans la direction longitudinale pour se terminer au niveau de ladite surface de paroi arrière (117), et un siège de montage (12) qui a ladite surface de paroi avant (127) qui est en retrait pour faire face à ladite surface de paroi arrière (117) et pour coopérer avec celle-ci pour définir ladite fente d'insertion (13), l'une desdites surfaces de paroi avant et arrière (127, 117) étant en retrait le long dudit chemin de déplacement de verrou pour définir ledit espace de déplacement de verrou (116).

3. Outil de toilettage pour animaux de compagnie tel que revendiqué dans la revendication 2, **caractérisé en ce que** ladite unité de verrouillage (20) a en outre un élément d'actionnement (23) disposé dans l'un(e) de ladite poignée (11) et dudit siège de montage (12), et ayant une partie de couplage (233) qui est couplée audit élément de verrouillage (21) pour provoquer le déplacement de ladite partie de verrouillage (212) vers la position de déverrouillage, et une partie actionnée (231) qui fait saillie vers l'extérieur depuis ledit corps d'outil (10) pour pouvoir être manuellement actionnée.

4. Outil de toilettage pour animaux de compagnie tel que revendiqué dans la revendication 3, **caractérisé en ce que** ladite poignée (11) a une paroi supérieure (113) et une fente de coulissement (115) qui s'étend depuis ladite paroi supérieure (113) dans une deuxième direction transversale qui est transversale au chemin de déplacement de verrou, et qui est en communication spatiale avec ledit espace de déplacement de verrou (116), ledit élément de verrouillage (21) ayant une partie entraînée (211) opposée à ladite partie de verrouillage (212) le long dudit chemin de déplacement de verrou, ladite partie de couplage (233) dudit élément d'actionnement (23) étant disposée dans ladite fente de coulissement (115) et pouvant coulisser le long de celle-ci pour amener ladite partie actionnée (231) à faire saillie vers le haut de ladite paroi supérieure (113), et à être configurée de sorte que, lorsque ladite partie d'actionnement (231) est enfoncée vers ladite paroi supérieure (113), ladite partie de verrouillage (212) soit poussée pour se retirer dans ledit espace de déplacement de verrou (116) jusqu'à la position de déverrouillage.

5. Outil de toilettage pour animaux de compagnie tel que revendiqué dans la revendication 4, **caractérisé en ce que** ladite poignée (11) a en outre une paroi inférieure (114) qui est opposée à ladite paroi supérieure (113) dans la deuxième direction transversale et à travers laquelle ladite fente de coulissement (115) s'étend, ledit élément d'actionnement (23) ayant en outre une paire de parties de crabot élastiques (232) qui s'étend depuis ladite partie de couplage (233) dans la deuxième direction transversale et qui a des extrémités de crochet (234) qui s'accrochent sur ladite paroi inférieure (114) lorsque lesdites parties de crabot élastiques (232) passent de manière ajustée à travers ladite fente de coulissement (115).

6. Outil de toilettage pour animaux de compagnie tel que revendiqué dans la revendication 2, **caractérisé en ce que** ledit élément de verrouillage (21) se présente sous la forme d'une bille en acier, et ladite surface de paroi arrière (117) est en retrait pour définir ledit espace de déplacement de verrou (116) et pour étendre ledit chemin de déplacement de verrou dans la direction longitudinale.

7. Outil de toilettage pour animaux de compagnie tel que revendiqué dans la revendication 3, **caractérisé en ce que** ladite surface de paroi avant (127) est en retrait pour définir ledit espace de déplacement de verrou (116) dans la direction longitudinale, ledit élément de verrouillage (21) ayant une partie de pivotement (216) qui est montée en pivotement sur ledit siège de montage (12), ladite partie de verrouillage (212) s'étendant radialement depuis ladite partie de pivotement (216) de sorte que, par rotation de ladite partie de pivotement (216), ladite partie de verrouillage (212) soit déplacée entre la position de verrouillage et la position de déverrouillage, ledit élément d'actionnement (23) s'étendant radialement depuis ladite partie de pivotement (216) et déplacé angulairement depuis ladite partie de verrouillage (212).

8. Outil de toilettage pour animaux de compagnie tel que revendiqué dans la revendication 3, **caractérisé en ce que** ladite surface de paroi avant (127) est en retrait pour définir ledit espace de déplacement de verrou (116) et pour étendre ledit chemin de déplacement de verrou dans la direction longitudinale, ladite partie de couplage (233) dudit élément d'actionnement (23) s'étendant depuis ledit élément de verrouillage (21) dans la direction longitudinale pour se terminer au niveau de ladite partie actionnée (231) qui fait saillie vers l'extérieur dudit siège de montage (12) de sorte que, par traction de ladite partie actionnée (231), ladite partie de verrouillage (212) soit déplacée pour se retirer dans ledit espace de déplacement de verrou (116) jusqu'à la position de déverrouillage.

9. Outil de toilettage pour animaux de compagnie tel que revendiqué dans la revendication 1, **caractérisé en ce que** ladite partie de peigne (32) d'au moins l'une desdites plaques de peigne (30) a une pluralité de dents (321) sous la forme de barres à aiguilles, ladite partie de peigne (32) d'au moins l'une desdites plaques de peigne (30) ayant une pluralité de dents (321) sous la forme de lames de démêlage.

10. Outil de toilettage pour animaux de compagnie tel que revendiqué dans la revendication 2, **caractérisé en ce que** ledit corps d'outil (10) a une ouverture d'accès (14) qui s'étend pour être en communication avec ladite fente d'insertion (13) et qui est disposée en regard de ladite partie de peigne (32) de l'une desdites plaques de peigne (30) insérées dans ladite fente d'insertion (13) dans la première direction transversale de sorte que ladite plaque desdites plaques de peigne (30) soit accessible depuis ladite ouverture d'accès (14).
